# EUROPEAN PATENT SPECIFICATION

(11) **EP 4 171 842 B1**
(45) Date of publication and mention of the grant of the patent: **06.08.2025**
(21) Application number: 20736937.2
(22) Date of filing: 24.06.2020
(51) Int. Cl.: B07B 1/46, F16B 19/10, F16B 5/02, F16B 13/08, F16B 13/00, F16B 13/12, F16B 21/04

(54) **FASTENING OF SCREENING MEDIA TO SCREENING EQUIPMENT**
BEFESTIGUNG VON SCREENING-MEDIEN AN SCREENING-AUSRÜSTUNG
FIXATION DE GARNITURE À UN ÉQUIPEMENT DE TAMISAGE

(43) Date of publication of application: 03.05.2023
(73) Proprietor: Sandvik SRP AB, 233 81 Svedala (SE)
(72) Inventor: HENSSIEN, Adrien, 23381 Svedala (SE); FRIMAN, André, 23381 Svedala (SE)
(74) Representative: Sandvik
(86) International application number: PCT/EP2020/067723
(87) International publication number: WO 2021/259470

(56) References cited:
- EP-A1- 3 296 030
- EP-A1- 3 696 429
- GB-A- 946 635
- US-A1- 2009 274 533
- US-A1- 2016 136 690
- US-A1- 2019 316 621
- US-B1- 6 287 044

## Description

### Field of invention

The present disclosure relates generally to a sleeve and pin combination for fastening of one or more screening media elements to a corresponding attachment socket of a screening equipment, a screening media element for co-operation with the sleeve and pin combination, as well as an arrangement for fastening of one or more screening media elements to corresponding attachment sockets of a screening equipment and a method for fastening of one or more screening media elements to corresponding attachment sockets of a screening equipment and also a screening equipment for separating solid materials according to size.

### Background art

Equipment for mining and/or rock excavation, such as screening machines, often have limited space between screen decks, which makes it difficult to install screening media.

A thermoplastic pin and sleeve attachment system for installing screening media is well known and has existed on the market for a long time. Attachment of screening media using this well-known pin and sleeve fastening system usually require heavy sledgehammers for installation, which is done by forcing a pin into a sleeve such that it is expanded and attached to a corresponding attachment socket of an associated equipment. Removal of the same pin and sleeve components is often associated with the use of sledgehammers, screwdrivers, knifes and other similar tools.

EP 3 296 030 A1 discloses a pin and sleeve attachment system that enables fastening of lining elements to a support structure. The lining element is a screening element according to the preamble of claim 7. It relies on the well-known type of sleeves in combination with a special type of threaded pin. The threaded pin is installed into the sleeves using a power tool, such as a screwing tool, by using a specially designed adapter tool, and thus eliminates the need to use a sledgehammer.

GB946635A discloses a screw-socket that is expandable by the shank of a countersunk-head fixing-screw, together these form a sleeve and pin combination according to the preamble of claim 1. The socket has a conical flange for receiving the screw-head and at least one longitudinal slot. The circumference of the flange of the synthetic plastics socket may be serrated, and the shank formed with two or more projections.

However, when using a threaded pin of the above type in conjunction with a standard sleeve the standard sleeve will sometimes tend to rotate with the pin when the pin is driven through the sleeve and when it is to be removed from the sleeve, making mounting and detachment problematic. Also, if rotation of the sleeve in relation to the screening media element occurs, heat build-up may occur in the thermoplastic pin and sleeve components, which may cause them to fail or break.

### Summary of the Invention

An object of the present invention is to provide an improved sleeve and pin combination for fastening of one or more screening media elements to a corresponding attachment socket of a screening equipment.

According to a first aspect this is provided through a sleeve and pin combination for fastening of one or more screening media elements to a corresponding attachment socket of a screening equipment, said sleeve comprising an axially extending through opening and a first enlarged cross-section portion and a second reduced cross-section portion defining a radially outwardly extending sleeve stop ledge at a juncture therebetween where at least part of said second reduced cross-section portion of said sleeve is receivable in a said corresponding attachment socket, and wherein said pin is adapted to be inserted into said axially extending through opening of said sleeve and rotated to be secured therein to expand at least said second reduced cross-section portion thereof radially outwardly such that it, when received in a said corresponding attachment socket of a said screening equipment will become fastened by press fit thereto, and said sleeve further comprising one or more rotation prevention form elements adapted to interact with complementary rotation prevention form elements of said one or more screening media elements to prevent mutual rotation therebetween to become induced by a said rotation of said pin. The sleeve and pin combination said one or more rotation prevention form elements are provided through said first enlarged cross-section portion of said sleeve having an at least partially non-circular cross-section adapted to co-operate with an at least partially complementary shaped non-circular cross-section enlarged cross-section portion of a through opening or edge cut-out of a said screening media element.

Thus, the above arrangement allows for safe and reliable installation and removal of screening media elements to and from corresponding attachment sockets of an associated screening equipment.

In a further embodiment of the sleeve and pin combination at least part of said second reduced cross-section portion of said sleeve comprises one or more axial slots, between said axially extending through opening and a periphery thereof, said one or more axial slots adapted to facilitate radial expansion of said second reduced cross-section portion of said sleeve by said pin.

In one alternative embodiment of the sleeve and pin combination said pin is threaded and adapted to be rotated upon insertion into said axially extending through opening of said sleeve such that it is screwed into said sleeve to become secured therein.

In another alternative embodiment of the sleeve and pin combination said pin comprises a first-half of a bayonet mount and said sleeve a second-half of a corresponding bayonet mount, and said pin is adapted to be rotated upon insertion into said axially extending through opening of said sleeve to become secured therein by interconnection of said bayonet mount halves resulting from a said rotation.

In some embodiments of the sleeve and pin combination said one or more rotation prevention form elements comprises at least one of radially extending cut-outs into or protrusions from a surface of at least one of said first enlarged cross-section portion and said second reduced cross-section portion.

In some further embodiments of the sleeve and pin combination said at least one of cut-outs into or protrusions from a surface of at least one of said first enlarged cross-section portion and said second reduced cross-section portion of said sleeve comprises at least one of: circle-sector shaped; spline shaped; or groove shaped, radially extending cut-outs or protrusions.

According to a second aspect there is provided a screening media element for co-operation with the above sleeve and pin combination.

In a first embodiment said screening media element has one or more through openings or edge cut-outs each with an enlarged and a reduced cross-section portion defining a radially inwardly extending sleeve stop shoulder at a juncture therebetween, said one or more through openings or edge cut-outs being adapted to receive a respective said sleeve such that a said sleeve stop ledge thereof rest upon said sleeve stop shoulder and such that at least part of a said second reduced cross-section portion thereof protrudes from said screening media element such that it is receivable in a said corresponding attachment socket of a said screening equipment, wherein said screening media element comprises one or more rotation prevention form elements adapted to interact with complementary rotation prevention form elements of a said sleeve to prevent mutual rotation therebetween to become induced by rotation of a said pin upon insertion thereof into a said sleeve, wherein said one or more rotation prevention form elements (1e) are provided through a first enlarged cross-section portion (1b) of said sleeve (1) having an at least partially non-circular cross-section adapted to co-operate with an at least partially complementary shaped non-circular cross-section enlarged cross-section portion (3a) the through opening or edge cut-out (3b) of a said screening media element (3).

In a further embodiment of the screening media element said one or more rotation prevention form elements comprises at least one of radially extending cut-outs into or protrusions from at least one surface of said enlarged and said reduced cross-section portion of a respective of said one or more through openings or edge cut-outs.

In a still further embodiment of the screening media element said at least one of radially extending cut-outs into or protrusions from at least one surface of said enlarged and said reduced cross-section portion of a respective of said one or more through openings or edge cut-outs comprises at least one of: circle-sector shaped; spline shaped; or groove shaped, radially extending cut-outs or protrusions.

In one alternative embodiment of the screening media element said one or more rotation prevention form elements are provided through said enlarged cross-section portion of a said through opening or edge cut-out of a said screening media element at least partially having a non-circular cross-section adapted to co-operate with an at least partially complementary shaped non-circular cross-section of a said first enlarged cross-section portion of a said sleeve.

According to a third aspect there is provided an arrangement for fastening of one or more screening media elements to corresponding attachment sockets of a screening equipment.

In a first embodiment said arrangement for fastening of one or more screening media elements to corresponding attachment sockets of a screening equipment comprises: at least one screening media element having one or more through openings or edge cut-outs each with an enlarged and a reduced cross-section portion defining a radially inwardly extending sleeve stop shoulder at a juncture therebetween; at least one sleeve comprising an axially extending through opening and a first enlarged cross-section portion and a second reduced cross-section portion defining a radially outwardly extending sleeve stop ledge at a juncture therebetween; at least one pin adapted to be inserted into said axially extending through opening of said sleeve to expand at least said second reduced cross-section portion thereof radially outwardly; said one or more through openings or edge cut-outs of said at least one screening media element being adapted to receive a respective said sleeve such that a said sleeve stop ledge thereof rest upon said sleeve stop shoulder and such that at least part of said second reduced cross-section portion thereof protrudes from said screening media element such that it is receivable in a said corresponding attachment socket of a said screening equipment such that it, when thus received, is adapted to become fastened by press fit thereto upon a said radial outward expansion caused by insertion of a said pin, wherein each said at least one pin further is adapted to be rotated to be secured to a respective said sleeve upon insertion into a said axially extending through opening thereof, and said one or more through openings or edge cut-outs of said at least one screening media element and said sleeve comprises one or more complementary rotation prevention form elements adapted to, when said sleeve is received in a said through opening or edge cut-out of said at least one screening media element, interact to prevent mutual rotation therebetween to become induced by rotation of a said pin upon insertion thereof into a said sleeve, wherein said one or more rotation prevention form elements (1e) are provided through said first enlarged cross-section portion (1b) of said sleeve (1) having an at least partially non-circular cross-section adapted to co-operate with an at least partially complementary shaped non-circular cross-section enlarged cross-section portion (3a) of the through opening or edge cut-out (3b) of a said screening media element (3).

According to a fourth aspect there is provided method for fastening of one or more screening media elements to corresponding attachment sockets of a screening equipment.

In a first embodiment this method comprises: placing a screening media element, having through openings or edge cut-outs with an enlarged and a reduced cross-section portion defining a radially inwardly extending sleeve stop shoulder at a juncture therebetween, upon a screening equipment and aligning said through openings or edge cut-outs with attachment sockets thereof; inserting, into said respective through openings or edge cut-outs of said one or more screening media elements, a respective sleeve comprising an axially extending through opening and a first enlarged cross-section portion and a second reduced cross-section portion defining a radially outwardly extending sleeve stop ledge at a juncture therebetween, such that said sleeve stop ledge rest upon said sleeve stop shoulder and such that at least part of said second reduced cross-section portion protrudes from said at least one screening element and is received in a respective said aligned attachment socket; inserting a respective pin into said axially extending through opening of each respective said sleeve to expand at least said second reduced cross-section portion thereof radially outwardly to become fastened by press fit to said attachment socket and rotating said pin to secure it to said sleeve, whilst preventing mutual rotation between said sleeve and said screening media element during said rotating by using screening media elements and sleeves having complementary shaped rotation prevention form elements at said through openings or edge cut-outs and at said sleeves, wherein said one or more rotation prevention form elements (1e) are provided through said first enlarged cross-section portion (1b) of said sleeve (1) having an at least partially non-circular cross-section adapted to co-operate with an at least partially complementary shaped non-circular cross-section enlarged cross-section portion (3a) of the through opening or edge cut-out (3b) of a said screening media element (3).

According to a fifth aspect there is provided a screening equipment for separating solid materials according to size.

In a first embodiment this screening equipment comprises: one or more attachment sockets for receiving and holding at least one screening media element having one or more through openings or edge cut-outs each with an enlarged and a reduced cross-section portion defining a radially inwardly extending sleeve stop shoulder at a juncture therebetween, said through openings or edge cut-outs aligned with said attachment sockets; a respective sleeve comprising an axially extending through opening and a first enlarged cross-section portion and a second reduced cross-section portion defining a radially outwardly extending sleeve stop ledge at a juncture therebetween, a respective said sleeve received in a respective of said through openings or edge cut-outs such that a said sleeve stop ledge thereof rest upon said sleeve stop shoulder and such that at least part of said second reduced cross-section portion thereof protrudes from said screening media element and is received in a respective said attachment socket; a respective pin inserted into said axially extending through opening of said sleeve such that at least said second reduced cross-section portion of said sleeve is expanded radially outwardly and fastened by press fit to said respective said attachment socket, wherein said respective pin further is secured to its respective sleeve by securing means requiring rotation of said respective pin, and said one or more through openings or edge cut-outs and said sleeve comprises one or more complementary rotation prevention form elements adapted to interact to prevent mutual rotation therebetween to become induced by rotation of a said pin, wherein the one or more rotation prevention form elements (1e) are provided through said first enlarged cross-section portion (1b) of said sleeve (1) having an at least partially non-circular cross-section adapted to co-operate with an at least partially complementary shaped non-circular cross-section enlarged cross-section portion (3a) of the through opening or edge cut-out (3b) of a said screening media element (3)

In a further embodiment said screening equipment comprises at least one screening media element, as above, and at least one sleeve and pin combination, as above.

Some of the above embodiments have the beneficial effects of contributing to a decreased risk of accidents and creating better working environments during installation and removal of screening media elements by enabling the use of standard power tools, such as electric screwdrivers or similar, that are safe to operate and by thus eliminating or at least reducing the need to use sledgehammers, screwdrivers, knifes and other similar tools during this work.

Besides health and safety aspects, at least some of the above embodiments could open the possibility to use modular screening media, also in screening machines with very limited free space between screen decks, where tension media is most commonly used today.

### Brief description of drawings

In the following, embodiments herein will be described in greater detail by way of example only with reference to attached drawings, in which:
Fig. 1 illustrates schematically a pin and sleeve combination screening media element fastening arrangement.
Fig. 2 illustrates schematically details of the pin and sleeve combination screening media element fastening arrangement according to figure 1.
Fig. 3 illustrates schematically an alternative embodiment pin and sleeve combination joinable by a bayonet mount.
Fig. 4 illustrates schematically an alternative embodiment of rotation prevention form elements.
Fig. 5 illustrates schematically an alternative embodiment of rotation prevention form elements.
Fig. 6 illustrates schematically an alternative embodiment of the pin and sleeve combination.
Fig. 7 illustrates schematically a screening equipment for separating solid materials according to size encompassing the pin and sleeve combination screening media element fastening arrangement.

### Detailed description of preferred embodiment of the invention

In the following will be described some example embodiments of an improved sleeve 1 and pin 2 combination for fastening of one or more screening media elements 3 to a corresponding attachment socket 4 of a screening equipment 5.

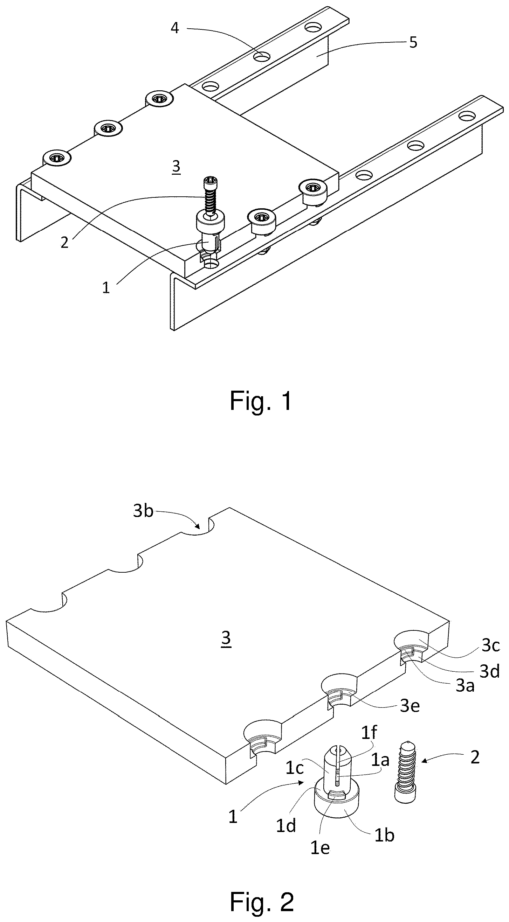

A sleeve 1 and pin 2 combination is illustrated in figure 1. In this first embodiment, as more clearly evident from figure 2, the sleeve 1 comprises an axially extending through opening 1a and a first enlarged cross-section portion 1b and a second reduced cross-section portion. The first enlarged cross-section portion 1b and the second reduced cross-section portion 1c defines a radially outwardly extending sleeve stop ledge 1d at a juncture therebetween. At least part of the second reduced cross-section portion 1c of the sleeve 1 is receivable in a corresponding attachment socket 4 of a screening equipment 5.

The sleeve 1 is made of a polymer material. This polymer material can be polyurethane, thermoplastic polyurethane (TPU) or a similar material. The polymer material can be reinforced, for example with fibres. The sleeve 1 is suitably manufactured by injection moulding.

The pin 2 is adapted to be inserted into the axially extending through opening 1a of the sleeve 1 and rotated to be secured therein. When secured therein the pin 2 will expand at least the second reduced cross-section portion 1c of the sleeve 1 radially outwardly such that it, when received in a corresponding attachment socket 4 of a screening equipment 5, will become fastened by press fit thereto. The sleeve 1 further comprises one or more rotation prevention form elements 1e. The rotation prevention form elements 1e are adapted to interact with complementary rotation prevention form elements 3a of the one or more screening media elements 3, to prevent mutual rotation between the sleeve 1 and the screening media elements 3 to become induced by rotation of the pin 2 as it is inserted into the axially extending through opening 1a of the sleeve 1 and rotated to be secured therein.

In embodiments of the sleeve 1 and pin 2 combination at least part of the second reduced cross-section portion 1c of the sleeve 1 comprises one or more axial slots 1f, between the axially extending through opening 1a and a periphery thereof. The one or more axial slots 1f are adapted to facilitate radial expansion of the second reduced cross-section portion 1c of the sleeve 1 by the pin 2 as it is inserted into the axially extending through opening 1a of the sleeve 1.

In one alternative embodiment of the sleeve 1 and pin 2 combination the pin 2 is threaded, as illustrated in figure 2. The threaded pin 2 is thus adapted to be rotated upon insertion into the axially extending through opening 1a of the sleeve 1 such that it is screwed into the sleeve 1 to become secured therein.

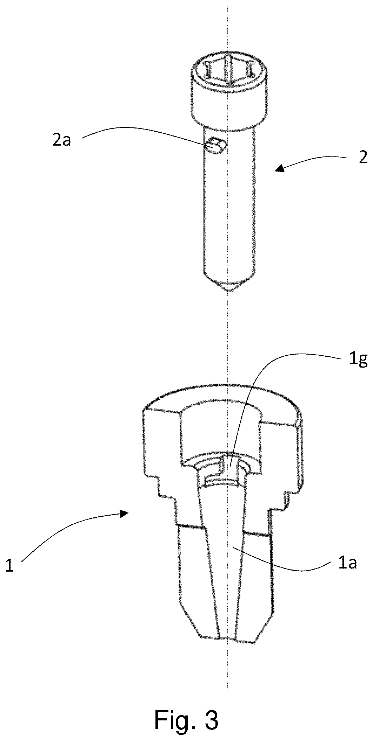

In another alternative embodiment of the sleeve 1 and pin 2 combination, as illustrated in figure 3, the pin 2 comprises a first-half 2a of a bayonet mount and the sleeve 1a second-half 1g of a corresponding bayonet mount. This is another way of preventing rotation. The pin 2 is adapted to be rotated upon insertion into the axially extending through opening 1a of the sleeve 1 to become secured therein by interconnection of the bayonet mount halves 2a and 1g resulting from such rotation.

In the sleeve 1 and pin 2 combination the one or more rotation prevention form elements 1e comprises at least one of radially extending cut-outs into or protrusions from a surface of at least one of the first enlarged cross-section portion 1b and the second reduced cross-section portion 1c.

In some further embodiments of the sleeve 1 and pin 2 combination the at least one of cut-outs into or protrusions from a surface of at least one of the first enlarged cross-section portion 1b and the second reduced cross-section portion 1c of the sleeve 1 comprises at least one of: circle-sector shaped; spline shaped; or groove shaped, radially extending cut-outs or protrusions.

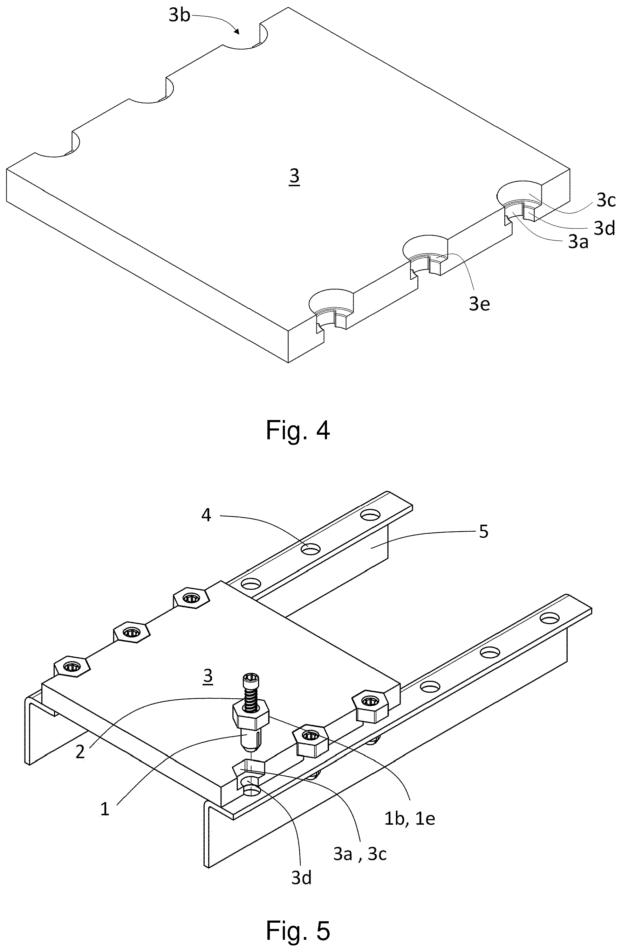

In yet further embodiments of the sleeve 1 and pin 2 combination, as illustrated in figure 4, the one or more rotation prevention form elements 1e are provided through the first enlarged cross-section portion 1b of the sleeve 1 having an at least partially non-circular cross-section, here illustrated as hexagonal, adapted to co-operate with an at least partially complementary shaped non-circular cross-section, here also illustrated as hexagonal, enlarged cross-section portion 3c of a through opening or edge cut-out 3b of a screening media element 3.

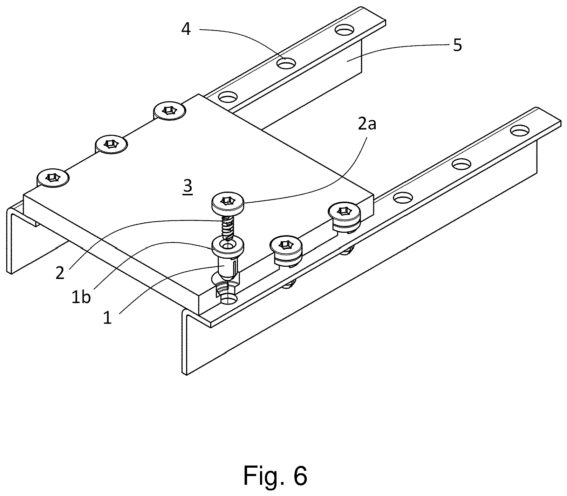

Although the pin 2 is illustrated in figures 1 and 2 as fully insertable into the axially extending through opening 1a of the sleeve 1, in some alternative embodiments, as illustrated in figure 6, the first enlarged cross-section portion 1b of a the sleeve 1 is shortened and the pin 2 comprises an enlarged head 2a, which, when mounted, effectively provide an extension of the first enlarged cross-section portion 1b of a the sleeve 1.

The pins 2 may be provided with suitable interfaces for rotation tooling, such as Phillips, hexagonal, Torx, external grooves or similar tooling.

According to a second aspect there is provided a screening media element 3, as illustrated in figures 1 and 2, for co-operation with the above described sleeve 1 and pin 2 combination.

In a first embodiment the screening media element 3 has one or more through openings or edge cut-outs 3b, each with an enlarged 3c and a reduced 3d cross-section portion defining a radially inwardly extending sleeve stop shoulder 3e at a juncture therebetween. The one or more through openings or edge cut-outs 3b are adapted to receive a respective sleeve 1, such that a sleeve stop ledge 1d thereof rest upon the sleeve stop shoulder 3e and such that at least part of a second reduced cross-section portion 1c thereof protrudes from the screening media element 3 such that it is receivable in a corresponding attachment socket 4 of a screening equipment 5. The screening media element 3 comprises one or more rotation prevention form elements 3a adapted to interact with complementary rotation prevention form elements 1e of a sleeve 1 to prevent mutual rotation therebetween to become induced by rotation of a pin 2 upon insertion thereof into a sleeve 1.

The screening media element 3 is suitably made from a polymer material, for example rubber, polyurethane or thermoplastic polyurethane (TPU). It is suitably manufactured by injection molding, compression molding or open cast molding. The screening media element 3 can be reinforced with for example a steel frame, composite frame or similar.

The herein described screening media elements 3, with through openings or edge cut-outs 3b adapted to the rotation-inhibited sleeves 1, are, in at least some embodiments, backwards compatible with traditional sleeves and pins, i.e. sleeves lacking rotation prevention form elements 1e, as described herein.

The one or more rotation prevention form elements 3a comprises at least one of radially extending cut-outs into or protrusions from at least one surface of the enlarged cross-section portion 3c and the reduced cross-section portion 3d of a respective of the one or more through openings or edge cut-outs 3b. In case of cut-outs, backwards compatibility with traditional sleeves is maintained.

The at least one of radially extending cut-outs into or protrusions from at least one surface of the enlarged 3c and the reduced 3d cross-section portion of a respective of the one or more through openings or edge cut-outs 3b comprises at least one of: circle-sector shaped; spline shaped; or groove shaped, radially extending cut-outs or protrusions.

The one or more rotation prevention form element 3a cut-outs or protrusions of the screening media element 3 may extend only partially through the screening media element 3, as illustrated in figures 1 and 2, or all the way through the screening media element 3, as illustrated in figure 4.

In one alternative embodiment of the screening media element 3, as illustrated in figure 5, the one or more rotation prevention form elements 3a are provided through the enlarged cross-section portion 3c of a through opening or edge cut-out 3b of a screening media element 3 at least partially having a non-circular cross-section, here illustrated as hexagonal. The at least partial non-circular cross-section of the enlarged cross-section portion 3c of a through opening or edge cut-out 3b adapted to co-operate with an at least partially complementary shaped non-circular cross-section, here also hexagonal, of a first enlarged cross-section portion 1b of a such sleeve 1. The here illustrated hexagonal configuration is also backwards compatible with traditional sleeves, having a circular cross section. According to a third aspect there is provided an arrangement 1, 2, 3 for fastening of one or more screening media elements 3 to corresponding attachment sockets 4 of a screening equipment 5.

As illustrated in figure 1, the arrangement 1, 2, 3 for fastening of one or more screening media elements 3 to corresponding attachment sockets 4 of a screening equipment 5.

The arrangement 1, 2, 3 comprises at least one screening media element 3 that has one or more through openings or edge cut-outs 3b. Each of the through openings or edge cut-outs 3b having an enlarged 3c and a reduced 3d cross-section portion, defining a radially inwardly extending sleeve stop shoulder 3e at a juncture therebetween.

The arrangement 1, 2, 3 further comprises at least one sleeve 1 with an axially extending through opening 1a. The sleeve 1 further comprises a first enlarged cross-section portion 1b and a second reduced cross-section portion 1c, defining a radially outwardly extending sleeve stop ledge 1d at a juncture therebetween.

In the arrangement 1, 2, 3, at least one pin 2 is adapted to be inserted into the axially extending through opening 1a of sleeve 1, to expand at least the second reduced cross-section portion 1c thereof radially outwardly. The one or more through openings or edge cut-outs 3b, of the at least one screening media element 3, are adapted to receive a respective sleeve 1. The screening media element 3, is adapted to receive the sleeve 1 such that a sleeve stop ledge 1d thereof rest upon a sleeve stop shoulder 3e and such that at least part of the second reduced cross-section portion 1c thereof protrudes from the screening media element 3, such that it is receivable in a corresponding attachment socket 4 of a screening equipment 5. Thus, the sleeve 1, when thus received, is adapted to become fastened by press fit to the attachment socket 4 upon a radial outward expansion of at least part of the second reduced cross-section portion 1c caused by insertion of a pin 2. Each at least one pin 2 of the arrangement 1, 2, 3, is further adapted to be rotated to be secured to a respective sleeve 1, upon insertion into an axially extending through opening 1a thereof.

The one or more through openings or edge cut-outs 3b of the at least one screening media element 3 and the sleeve 1 of the arrangement 1, 2, 3, further comprises one or more complementary rotation prevention form elements 1e, 3a adapted to, when the sleeve 1 is received in a through opening or edge cut-out 3b of the at least one screening media element 3, interact to prevent mutual rotation therebetween to become induced by rotation of a pin 2 upon insertion thereof into a sleeve 1.

According to a fourth aspect there is provided method for fastening of one or more screening media elements 3 to corresponding attachment sockets 4 of a screening equipment 5.

This method comprises: placing a screening media element 3, having through openings or edge cut-outs 3b with an enlarged 3c and a reduced 3d cross-section portion defining a radially inwardly extending sleeve stop shoulder 3e at a juncture therebetween, upon a screening equipment 5 and aligning the through openings or edge cut-outs 3b with attachment sockets 4 thereof; inserting, into the respective through openings or edge cut-outs 3b of the one or more screening media elements 3, a respective sleeve 1 comprising an axially extending through opening 1a and a first enlarged cross-section portion 1b and a second reduced cross-section portion 1c defining a radially outwardly extending sleeve stop ledge 1d at a juncture therebetween, such that the sleeve stop ledge 1d rest upon the sleeve stop shoulder 3e and such that at least part of the second reduced cross-section portion 1c protrudes from the at least one screening element 3 and is received in a respective aligned attachment socket 4; inserting a respective pin 2 into the axially extending through opening 1a of each respective sleeve 1 to expand at least the second reduced cross-section portion 1c thereof radially outwardly to become fastened by press fit to the attachment socket 4 and rotating the pin 2 to secure it to the sleeve 1, whilst preventing mutual rotation between the sleeve 1 and the screening media element 3 during that rotating by using screening media elements 3 and sleeves 1 having complementary shaped rotation prevention form elements 1e and 3a at the through openings or edge cut-outs 3b and at the sleeves 1.

According to a fifth aspect there is provided a screening equipment 5 for separating solid materials according to size.

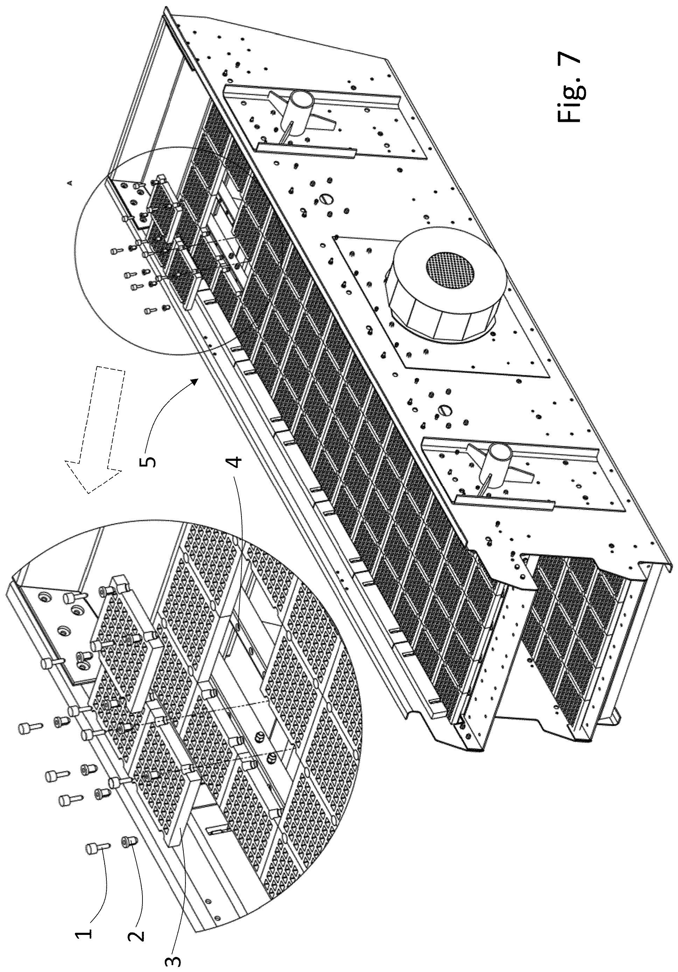

As illustrated in figure 7, this screening equipment 5 comprises, as shown in more detail in the enlarged view of the circled area as indicated by the dotted arrow, one or more attachment sockets 4 for receiving and holding at least one screening media element 3 having one or more through openings or edge cut-outs 3b each with an enlarged 3c and a reduced 3d cross-section portion defining a radially inwardly extending sleeve stop shoulder 3e at a juncture therebetween. The through openings or edge cut-outs 3b of each screening media element 3 is aligned with the attachment sockets 4.

A respective sleeve 1, comprises an axially extending through opening 1a and a first enlarged cross-section portion 1b and a second reduced cross-section portion 1c, defining a radially outwardly extending sleeve stop ledge 1d at a juncture therebetween. A respective such sleeve 1 is received in a respective of the through openings or edge cut-outs 3b of the screening media elements 3, such that the respective sleeve stop ledges 1d thereof rest upon a respective sleeve stop shoulder 3e and such that at least part of the respective second reduced cross-section portions 1c of the respective sleeves 1 protrudes from the screening media element 3 and is received in a respective attachment socket 4.

A respective pin 2 is inserted into the axially extending through openings 1a of the respective sleeves 1, such that at least the second reduced cross-section portions 1c of the respective sleeves are expanded radially outwardly and fastened by press fit to the respective attachment socket 4.

The respective pins 2 are further secured to their respective sleeves 1 by securing means, such as threads or bayonet mounts, as described in the foregoing, requiring rotation of the respective pin 2.

The one or more through openings or edge cut-outs 3b and the respective sleeves 1 comprises one or more complementary rotation prevention form elements 1e, 3a, adapted to interact to prevent mutual rotation between the sleeves 1 and the one or more through openings or edge cut-outs 3b to become induced by rotation of the pin 2.

In a further embodiment the screening equipment 5 comprises at least one screening media element 3, as above, and at least one sleeve 1 and pin 2 combination, as above.

Thus, some of the above embodiments have the beneficial effects of providing for safe and reliable installation and removal of screening media elements 3 to and from corresponding attachment sockets 4 of an associated screening equipment 5.

Yet some of the above embodiments have the beneficial effects of contributing to a decreased risk of accidents and creating better working environments during installation and removal of screening media elements 3 by enabling the use of standard power tools, such as electric screwdrivers or similar, that are safe to operate and by thus eliminating or at least reducing the need to use sledgehammers, screwdrivers, knifes and other similar tools during this work.

Besides health and safety aspects, at least some of the above embodiments could furthermore open the possibility to use modular screening media 3, also in screening machines with very limited free space between screen decks, where tension media is most commonly used today.

The improved pin and sleeve combination fastening arrangement described herein is not limited for use only with screening media 3, it also be used together with other similar products, such as lining products, for example. Such lining products should suitably be provided with through openings or edge cut-outs 3b comprising one or more rotation prevention form elements 3e adapted to the rotation-inhibited sleeves 1, as described herein.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe exemplary embodiments in the context of certain exemplary combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. In cases where advantages, benefits or solutions to problems are described herein, it should be appreciated that such advantages, benefits and/or solutions may be applicable to some example embodiments, but not necessarily all example embodiments. Thus, any advantages, benefits or solutions described herein should not be thought of as being critical, required or essential to all embodiments or to that which is claimed herein. Although specific terms are employed herein, they are used in a generic and descriptive sense only and not for purposes of limitation.

## Claims

1. Sleeve (1) and pin (2) combination for fastening of one or more screening media elements (3) to a corresponding attachment socket (4) of a screening equipment (5), said sleeve (1) is made of a polymer material and comprises an axially extending through opening (1a), a first enlarged cross-section portion (1b) and a second reduced cross-section portion (1c) defining a radially outwardly extending sleeve stop ledge (1d) at a juncture therebetween where at least part of said second reduced cross-section portion (1c) of said sleeve (1) is receivable in a said corresponding attachment socket (4), and
wherein said pin (2) is adapted to be inserted into said axially extending through opening (1a) of said sleeve (1) and rotated to be secured therein to expand at least said second reduced cross-section portion (1c) thereof radially outwardly such that it, when received in a said corresponding attachment socket (4) of a said screening equipment (5) will become fastened by press fit thereto, and said sleeve (1) further comprising one or more rotation prevention form elements (1e) adapted to interact with complementary rotation prevention form elements (3a) of said one or more screening media elements (3) to prevent mutual rotation therebetween to become induced by a said rotation of said pin (2), wherein said one or more rotation prevention form elements (1e) are provided through said first enlarged cross-section portion (1b) of said sleeve (1) **characterised in that** the one or more rotation prevention form elements have an at least partially non-circular cross-section adapted to co-operate with an at least partially complementary shaped non-circular cross-section enlarged cross-section portion (3a) of a through opening or edge cut-out (3b) of a said screening media element (3).

2. Sleeve (1) and pin (2) combination according to claim 1, wherein at least part of said second reduced cross-section portion (1c) of said sleeve (1) comprises one or more axial slots (1f), between said axially extending through opening (1a) and a periphery thereof, said one or more axial slots (1f) adapted to facilitate radial expansion of said second reduced cross-section portion (1c) of said sleeve (1) by said pin (2).

3. Sleeve (1) and pin (2) combination according to any one of claims 1 or 2, wherein said pin (2) is threaded and adapted to be rotated upon insertion into said axially extending through opening (1a) of said sleeve (1) such that it is screwed into said sleeve (1) to become secured therein.

4. Sleeve (1) and pin (2) combination according to any one of claims 1 or 2, wherein said pin (2) comprises a first-half (2a) of a bayonet mount and said sleeve (1) a second-half (1g) of a corresponding bayonet mount, and said pin (2) is adapted to be rotated upon insertion into said axially extending through opening (1a) of said sleeve (1) to become secured therein by interconnection of said bayonet mount halves (2a, 1g) resulting from a said rotation.

5. Sleeve (1) and pin (2) combination according to any one of claims 1 to 4, wherein said one or more rotation prevention form elements (1e) comprises at least one of radially extending cut-outs into or protrusions from a surface of at least one of said first enlarged cross-section portion (1b) and said second reduced cross-section portion (1c).

6. Sleeve (1) and pin (2) combination according to claim 5, wherein
said at least one of cut-outs into or protrusions from a surface of at least one of said first enlarged cross-section portion (1b) and said second reduced cross-section portion (1c) of said sleeve (1) comprises at least one of: circle-sector shaped; spline shaped; or groove shaped, radially extending cut-outs or protrusions.

7. Screening media element (3) for co-operation with the sleeve (1) and pin (2) combination according to any one of claims 1 to 6, said screening media element (3) having one or more through openings or edge cut-outs (3b) each with an enlarged (3c) and a reduced (3d) cross-section portion defining a radially inwardly extending sleeve stop shoulder (3e) at a juncture therebetween, said one or more through openings or edge cut-outs (3b) being adapted to receive a respective said sleeve (1) such that a said sleeve stop ledge (1d) thereof rest upon said sleeve stop shoulder (3e) and such that at least part of a said second reduced cross-section portion (1c) thereof protrudes from said screening media element (3) such that it is receivable in a said corresponding attachment socket (4) of a said screening equipment (5), **characterised in that** said screening media element (3) comprises one or more rotation prevention form elements (3a) adapted to interact with complementary rotation prevention form elements (1e) of a said sleeve (1) to prevent mutual rotation therebetween to become induced by rotation of a said pin (2) upon insertion thereof into a said sleeve (1), wherein said one or more rotation prevention form elements (1e) are provided through a first enlarged cross-section portion (1b) of said sleeve (1) having an at least partially non-circular cross-section adapted to co-operate with an at least partially complementary shaped non-circular cross-section enlarged cross-section portion (3a) the through opening or edge cut-out (3b) of a said screening media element (3).

8. Screening media element (3) according to claim 7, wherein said one or more rotation prevention form elements (3a) comprises at least one of radially extending cut-outs into or protrusions from at least one surface of said enlarged (3c) and said reduced (3d) cross-section portion of a respective of said one or more through openings or edge cut-outs (3b).

9. Screening media element (3) according to claim 8, wherein said at least one of radially extending cut-outs into or protrusions from at least one surface of said enlarged (3c) and said reduced (3d) cross-section portion of a respective of said one or more through openings or edge cut-outs (3b) comprises at least one of: circle-sector shaped; spline shaped; or groove shaped, radially extending cut-outs or protrusions.

10. Screening media element (3) according to claim 7, wherein
said one or more rotation prevention form elements (3a) are provided through said enlarged cross-section portion (3c) of a said through opening or edge cut-out (3b) of a said screening media element (3) at least partially having a non-circular cross-section adapted to co-operate with an at least partially complementary shaped non-circular cross-section of a said first enlarged cross-section portion (1b) of a said sleeve (1).

11. Arrangement (1, 2, 3) for fastening of one or more screening media elements (3) to corresponding attachment sockets (4) of a screening equipment (5), comprising:
at least one screening media element (3) having one or more through openings or edge cut-outs (3b) each with an enlarged (3c) and a reduced (3d) cross-section portion defining a radially inwardly extending sleeve stop shoulder (3e) at a juncture therebetween;
at least one sleeve (1) made of a polymer material and comprising an axially extending through opening (1a) and a first enlarged cross-section portion (1b) and a second reduced cross-section portion (1c) defining a radially outwardly extending sleeve stop ledge (1d) at a juncture therebetween;
at least one pin (2) adapted to be inserted into said axially extending through opening (1a) of said sleeve (1) to expand at least said second reduced cross-section portion (1c) thereof radially outwardly;
said one or more through openings or edge cut-outs (3b) of said at least one screening media element (3) being adapted to receive a respective said sleeve (1) such that a said sleeve stop ledge (1d) thereof rest upon said sleeve stop shoulder (3e) and such that at least part of said second reduced cross-section portion (1c) thereof protrudes from said screening media element (3) such that it is receivable in a said corresponding attachment socket (4) of a said screening equipment (5) such that it, when thus received, is adapted to become fastened by press fit thereto upon a said radial outward expansion caused by insertion of a said pin (2);
wherein each said at least one pin (2) further is adapted to be rotated to be secured to a respective said sleeve (1) upon insertion into a said axially extending through opening (1a) thereof, and said one or more through openings or edge cut-outs (3b) of said at least one screening media element (3) and said sleeve (1) comprises one or more complementary rotation prevention form elements (1e, 3a) adapted to, when said sleeve (1) is received in a said through opening or edge cut-out (3b) of said at least one screening media element (3), interact to prevent mutual rotation therebetween to become induced by rotation of a said pin (2) upon insertion thereof into a said sleeve (1), wherein said one or more rotation prevention form elements (1e) are provided through said first enlarged cross-section portion (1b) of said sleeve (1) having an at least partially non-circular cross-section adapted to co-operate with an at least partially complementary shaped non-circular cross-section enlarged cross-section portion (3a) of the through opening or edge cut-out (3b) of a said screening media element (3).

12. A method for fastening of one or more screening media elements (3) to corresponding attachment sockets (4) of a screening equipment (5), comprising:
placing a screening media element (3), having through openings or edge cut-outs (3b) with an enlarged (3c) and a reduced (3d) cross-section portion defining a radially inwardly extending sleeve stop shoulder (3e) at a juncture therebetween, upon a screening equipment (5) and aligning said through openings or edge cut-outs (3b) with attachment sockets (4) thereof;
inserting, into said respective through openings or edge cut-outs (3b) of said one or more screening media elements (3), a respective sleeve (1) comprising an axially extending through opening (1a) and a first enlarged cross-section portion (1b) and a second reduced cross-section portion (1c) defining a radially outwardly extending sleeve stop ledge (1d) at a juncture therebetween, such that said sleeve stop ledge (1d) rest upon said sleeve stop shoulder (3e) and such that at least part of said second reduced cross-section portion (1c) protrudes from said at least one screening element (3) and is received in a respective said aligned attachment socket (4);
inserting a respective pin (2) into said axially extending through opening (1a) of each respective said sleeve (1) to expand at least said second reduced cross-section portion (1c) thereof radially outwardly to become fastened by press fit to said attachment socket (4) and rotating said pin (2) to secure it to said sleeve (1), whilst preventing mutual rotation between said sleeve (1) and said screening media element (3) during said rotating by using screening media elements (3) and sleeves (1) having complementary shaped rotation prevention form elements (3a, 1e) at said through openings or edge cut-outs (3b) and at said sleeves (1),
wherein said one or more rotation prevention form elements (1e) are provided through said first enlarged cross-section portion (1b) of said sleeve (1) having an at least partially non-circular cross-section adapted to co-operate with an at least partially complementary shaped non-circular cross-section enlarged cross-section portion (3a) of the through opening or edge cut-out (3b) of a said screening media element (3).

13. Screening equipment (5) for separating solid materials according to size comprising:
one or more attachment sockets (4) for receiving and holding at least one screening media element (3) having one or more through openings or edge cut-outs (3b) each with an enlarged (3c) and a reduced (3d) cross-section portion defining a radially inwardly extending sleeve stop shoulder (3e) at a juncture therebetween, said through openings or edge cut-outs (3b) aligned with said attachment sockets (4);
a respective sleeve (1) made of a polymer material and comprising an axially extending through opening (1a) and a first enlarged cross-section portion (1b) and a second reduced cross-section portion (1c) defining a radially outwardly extending sleeve stop ledge (1d) at a juncture therebetween, a respective said sleeve (1) received in a respective of said through openings or edge cut-outs (3b) such that a said sleeve stop ledge (1d) thereof rest upon said sleeve stop shoulder (3e) and such that at least part of said second reduced cross-section portion (1c) thereof protrudes from said screening media element (3) and is received in a respective said attachment socket (4);
a respective pin (2) Inserted into said axially extending through opening (1a) of said sleeve (1) such that at least said second reduced cross-section portion (1c) of said sleeve (1) is expanded radially outwardly and fastened by press fit to said respective said attachment socket (4),
wherein said respective pin (2) further is secured to its respective sleeve (1) by securing means requiring rotation of said respective pin (2), and said one or more through openings or edge cut-outs (3b) and said sleeve (1) comprises one or more complementary rotation prevention form elements (3a, 1e) adapted to interact to prevent mutual rotation therebetween to become induced by rotation of a said pin (2), wherein said one or more rotation prevention form elements (1e) are provided through said first enlarged cross-section portion (1b) of said sleeve (1) having an at least partially non-circular cross-section adapted to co-operate with an at least partially complementary shaped non-circular cross-section enlarged cross-section portion (3a) of the through opening or edge cut-out (3b) of a said screening media element (3).

14. Screening equipment (5) for separating solid materials according to size comprising at least one screening media element (3) according to any one of claims 7 to 10 and at least one sleeve (1) and pin (2) combination according to any one of claims 1 to 6.

## Patentansprüche

1. Kombination aus Hülse (1) und Stift (2) zum Befestigen eines oder mehrerer Siebmedienelemente (3) an einer entsprechenden Anbaumuffe (4) einer Siebausrüstung (5), wobei die Hülse (1) aus einem Polymermaterial hergestellt ist und eine sich axial erstreckende Durchgangsöffnung (1a), einen ersten Abschnitt (1b) mit vergrößertem Querschnitt und einen zweiten Abschnitt (1c) mit verringertem Querschnitt umfasst, die an einer Verbindungsstelle dazwischen eine sich radial nach außen erstreckende Hülsenanschlagleiste (1d) definieren, wobei mindestens ein Teil des zweiten Abschnitts (1c) mit verringertem Querschnitt der Hülse (1) in einer entsprechenden Anbaumuffe (4) aufnehmbar ist, und
wobei der Stift (2) dazu angepasst ist, in die sich axial erstreckende Durchgangsöffnung (1a) der Hülse (1) eingesetzt und gedreht zu werden, um darin gesichert zu werden und mindestens den zweiten Abschnitt (1c) mit verringertem Querschnitt davon radial nach außen derart auszudehnen, dass er, wenn er in der entsprechenden Anbaumuffe (4) einer Siebausrüstung (5) aufgenommen ist, durch Presspassung daran befestigt wird, und die Hülse (1) weiter ein oder mehrere Rotationschutzformelemente (1e) umfasst, die dazu angepasst sind, mit komplementären Rotationschutzformelementen (3a) des einen oder mehrerer Siebmedienelemente (3) in Wechselwirkung zu treten, um zu verhindern, dass eine gegenseitige Drehung durch Drehung des Stifts (2) bewirkt wird, wobei das eine oder die mehreren Rotationsschutzformelemente (1e) durch den ersten Abschnitt (1b) mit vergrößertem Querschnitt der Hülse (1) hindurch bereitgestellt sind,
**dadurch gekennzeichnet, dass** das eine oder die mehreren Rotationsschutzformelemente einen mindestens teilweise nicht kreisförmigen Querschnitt aufweisen, der dazu angepasst ist, mit einem mindestens teilweise komplementär geformten nicht kreisförmigem Querschnitt des Abschnitts (3a) mit vergrößertem Querschnitt einer Durchgangsöffnung oder eines Randausschnitts (3b) eines Siebmedienelements (3) zusammenzuwirken.

2. Kombination aus Hülse (1) und Stift (2) nach Anspruch 1, wobei mindestens ein Teil des zweiten Abschnitts (1c) mit verringertem Querschnitt der Hülse (1) einen oder mehrere axiale Schlitze (1f) zwischen der sich axial erstreckenden Durchgangsöffnung (1a) und einem Umfang davon umfasst, wobei der eine oder die mehreren axialen Schlitze (1f) dazu angepasst sind, die radiale Ausdehnung des zweiten Abschnitts (1c) mit verringertem Querschnitt der Hülse (1) durch den Stift (2) zu erleichtern.

3. Kombination aus Hülse (1) und Stift (2) nach einem der Ansprüche 1 oder 2, wobei der Stift (2) mit einem Gewinde versehen und dazu angepasst ist, beim Einsetzen in die sich axial erstreckende Durchgangsöffnung (1a) der Hülse (1) derart gedreht zu werden, dass er in die Hülse (1) geschraubt wird, um darin gesichert zu werden.

4. Kombination aus Hülse (1) und Stift (2) nach einem der Ansprüche 1 oder 2, wobei der Stift (2) eine erste Hälfte (2a) eines Bajonettverschlusses und die Hülse (1) eine zweite Hälfte (1g) eines entsprechenden Bajonettverschlusses umfasst, und der Stift (2) dazu angepasst ist, beim Einsetzen in die sich axial erstreckende Durchgangsöffnung (1a) der Hülse (1) gedreht zu werden, um darin durch die aus der Drehung resultierende Verbindung der Bajonettverschlusshälften (2a, 1g) gesichert zu werden.

5. Kombination aus Hülse (1) und Stift (2) nach einem der Ansprüche 1 bis 4, wobei das eine oder die mehreren Rotationsschutzformelemente (1e) mindestens eines von sich radial erstreckenden Ausschnitten in oder Vorsprüngen aus einer Oberfläche von mindestens einem des erstens Abschnitts (1b) mit vergrößertem Querschnitt und des zweiten Abschnitts (1c) mit verringertem Querschnitt umfasst/umfassen.

6. Kombination aus Hülse (1) und Stift (2) nach Anspruch 5, wobei mindestens einer der Ausschnitte in oder Vorsprünge aus einer Oberfläche von mindestens einem des ersten Abschnitts (1b) mit vergrößertem Querschnitt und des zweiten Abschnitts (1c) mit verringertem Querschnitt der Hülse (1) mindestens eines umfasst von: kreissektorförmigen; keilförmigen; oder nutförmigen, sich radial erstreckenden Ausschnitten oder Vorsprüngen.

7. Siebmedienelement (3) zum Zusammenarbeiten mit der Kombination aus Hülse (1) und Stift (2) nach einem der Ansprüche 1 bis 6, wobei das Siebmedienelement (3) eine oder mehrere Durchgangsöffnungen oder Randausschnitte (3b) jeweils mit einem Abschnitt (3c) mit einem vergrößerten und einem verringerten Querschnitt (3d) aufweist, die an einer Verbindungsstelle dazwischen eine sich radial nach innen erstreckende Hülsenanschlagschulter (3e) definieren, wobei die eine oder die mehreren Durchgangsöffnungen oder Randausschnitte (3b) dazu angepasst sind, eine jeweilige Hülse (1) derart aufzunehmen, dass eine Hülsenanschlagleiste (1d) davon auf der Hülsenanschlagschulter (3e) aufliegt, und derart, dass mindestens ein Teil eines zweiten Abschnitts (1c) mit verringertem Querschnitt davon aus dem Siebmedienelement (3) derart herausragt, dass es in einer entsprechenden Anbaumuffe (4) einer Siebausrüstung (5) aufnehmbar ist,
**dadurch gekennzeichnet, dass**
das Siebmedienelement (3) ein oder mehrere Rotationsschutzformelemente (3a) umfasst, die dazu angepasst sind, mit
komplementären Rotationsschutzformelementen (1e) einer Hülse (1) in Wechselwirkung zu treten, um zu verhindern, dass eine gegenseitige Drehung zwischen ihnen durch Drehung des Stifts (2) beim Einsetzen davon in die Hülse (1) bewirkt wird, wobei das eine oder die mehreren Rotationsschutzformelemente (1e) durch einen ersten Abschnitt (1b) mit vergrößertem Querschnitt der Hülse (1) hindurch bereitgestellt sind, der einen mindestens teilweise nicht kreisförmigen Querschnitt aufweist, der dazu angepasst ist, mit einem mindestens teilweise komplementär geformten nicht kreisförmigem Querschnitt des Abschnitts (3a) mit vergrößertem Querschnitt der Durchgangsöffnung oder des Randausschnitts (3b) eines Siebmedienelements (3) zusammenzuwirken.

8. Siebmedienelement (3) nach Anspruch 7, wobei das eine oder die mehreren Rotationschutzformelemente (3a) mindestens eines von sich radial erstreckenden Ausschnitten in oder Vorsprüngen aus mindestens einer Oberfläche des Abschnitts (3c) mit vergrößertem und verringertem Querschnitt (3d) einer jeweiligen des einen oder der mehreren Durchgangsöffnungen oder Randausschnitte (3b) umfasst/umfassen.

9. Siebmedienelement (3) nach Anspruch 8, wobei der mindestens eine von sich radial erstreckenden Ausschnitten in oder Vorsprüngen aus mindestens einer Oberfläche des Abschnitts (3c) mit vergrößertem und verringertem Querschnitt (3d) einer jeweiligen des einen oder der mehreren Durchgangsöffnungen oder Randausschnitte (3b) mindestens eines umfasst von: kreissektorförmigen; keilförmigen; oder nutförmigen, sich radial erstreckenden Ausschnitten oder Vorsprüngen.

10. Siebmedienelement (3) nach Anspruch 7, wobei
das eine oder die mehreren Rotationsschutzformelemente (3a) durch den Abschnitt mit vergrößertem Querschnitt (3c) einer Durchgangsöffnung oder eines Randausschnitts (3b) eines Siebmedienelements (3) hindurch bereitgestellt sind, die mindestens teilweise einen nicht kreisförmigen Querschnitt aufweisen, der dazu angepasst ist, mit einem mindestens teilweise komplementär geformten nicht kreisförmigen Querschnitt eines ersten Abschnitts (1b) mit vergrößertem Querschnitt einer Hülse (1) zusammenzuwirken.

11. Anordnung (1, 2, 3) zum Befestigen eines oder mehrerer Siebmedienelemente (3) an entsprechenden Anbaumuffen (4) einer Siebausrüstung (5), die Folgendes umfasst:
mindestens ein Siebmedienelement (3), das eine oder mehrere Durchgangsöffnungen oder Randausschnitte (3b) jeweils mit einem Abschnitt (3c) mit einem vergrößerten und einem verringerten Querschnitt (3d) aufweist, die an einer Verbindungsstelle dazwischen eine sich radial nach innen erstreckende Hülsenanschlagschulter (3e) definieren;
mindestens eine Hülse (1), die aus einem Polymermaterial hergestellt ist, die eine sich axial erstreckende Durchgangsöffnung (1a) und einen ersten Abschnitt (1b) mit vergrößertem Querschnitt und einen zweiten Abschnitt (1c) mit verringertem Querschnitt umfasst, die an einer Verbindungsstelle dazwischen eine sich radial nach außen erstreckende Hülsenanschlagleiste (1d) definieren;
mindestens einen Stift (2), der dazu angepasst ist, in die sich axial erstreckende Durchgangsöffnung (1a) der Hülse (1) eingesetzt zu werden, um mindestens den zweiten Abschnitt (1c) mit verringertem Querschnitt davon radial nach außen auszudehnen;
wobei die eine oder die mehreren Durchgangsöffnungen oder Randausschnitte (3b) des mindestens einen Siebmedienelements (3) dazu angepasst sind, eine jeweilige Hülse (1) derart aufzunehmen, dass eine Hülsenanschlagleiste (1d) davon auf der Hülsenanschlagschulter (3e) aufliegt und dass mindestens ein Teil des zweiten Abschnitts (1c) mit verringertem Querschnitt davon aus dem Siebmedienelement (3) derart herausragt, dass es in einer entsprechenden Anbaumuffe (4) einer Siebausrüstung (5) derart aufnehmbar ist, dass es, wenn es derart aufgenommen ist, dazu angepasst ist, bei einer radialen Ausdehnung nach außen, die durch das Einsetzen eines Stifts (2) verursacht wird, durch Presspassung daran befestigt zu sein;
wobei jeder des mindestens einen Stifts (2) weiter dazu angepasst ist, beim Einsetzen in eine sich axial erstreckende Durchgangsöffnung (1a) davon gedreht zu werden, um in einer jeweiligen Hülse (1) gesichert zu sein, und wobei die eine oder die mehreren Durchgangsöffnungen oder Randausschnitte (3b) des mindestens einen Siebmedienelements (3) und die Hülse (1) ein oder mehrere komplementäre Rotationschutzformelemente (1e, 3a) umfassen, die dazu angepasst sind, wenn die Hülse (1) in der Durchgangsöffnung oder dem Randausschnitt (3b) des mindestens einen Siebmedienelements (3) aufgenommen ist, in Wechselwirkung zu treten, um zu verhindern, dass eine gegenseitige Drehung zwischen ihnen durch Drehung des Stifts (2) beim Einsetzen in die Hülse (1) bewirkt wird, wobei das eine oder die mehreren Rotationschutzformelemente (1e) durch den ersten Abschnitt (1b) mit vergrößertem Querschnitt der Hülse (1) hindurch bereitgestellt werden, der einen mindestens teilweise nicht kreisförmigen Querschnitt aufweist, der dazu angepasst ist, mit einem mindestens teilweise komplementär geformten nicht kreisförmigem Querschnitt des Abschnitts (3a) mit vergrößertem Querschnitt der Durchgangsöffnung oder des Randausschnitts (3b) eines Siebmedienelements (3) zusammenzuwirken.

12. Verfahren zum Befestigen eines oder mehrerer Siebmedienelemente (3) an entsprechenden Anbaumuffen (4) einer Siebausrüstung (5), das Folgendes umfasst: Platzieren eines Siebmedienelements (3), das Durchgangsöffnungen oder Randausschnitte (3b) mit einem Abschnitt (3c) mit einem vergrößerten und einem verringerten Querschnitt (3d) aufweist, die an einer Verbindungsstelle dazwischen eine sich radial nach innen erstreckende Hülsenanschlagschulter (3e) definieren, auf einer Siebausrüstung (5) und Ausrichten der Durchgangsöffnungen oder Randausschnitte (3b) mit den Anbaumuffen (4) davon;
Einsetzen in die jeweiligen Durchgangsöffnungen oder Randausschnitte (3b) des einen oder mehrerer Siebmedienelemente (3) einer jeweiligen Hülse (1), die eine sich axial erstreckende Durchgangsöffnung (1a) und einen ersten Abschnitt (1b) mit vergrößertem Querschnitt und einen zweiten Abschnitt (1c) mit verringertem Querschnitt umfasst, die an einer Verbindungsstelle dazwischen eine sich radial nach außen erstreckende Hülsenanschlagleiste (1d) derart definieren, dass die Hülsenanschlagleiste (1d) auf der Hülsenanschlagschulter (3e) aufliegt, und derart, dass mindestens ein Teil des zweiten Abschnitts (1c) mit verringertem Querschnitt aus dem mindestens einen Siebelement (3) hervorragt und in einer jeweiligen ausgerichteten Anbaumuffe (4) aufgenommen wird;
Einsetzen eines jeweiligen Stifts (2) in die sich axial erstreckende Durchgangsöffnung (1a) jeder jeweiligen Hülse (1), um mindestens den zweiten Abschnitt (1c) mit verringertem Querschnitt radial nach außen auszudehnen, um durch Presspassung an der Anbaumuffe (4) befestigt zu werden, und Drehen des Stifts (2), um ihn an der Hülse (1) zu sichern, während eine gegenseitige Drehung zwischen der Hülse (1) und dem Siebmedienelement (3) während des Drehens durch Verwendung von Siebmedienelementen (3) und Hülsen (1) verhindert wird, die komplementär geformte Rotationschutzformelemente (3a, 1e) an den Durchgangsöffnungen oder Randausschnitten (3b) und an den Hülsen (1) aufweisen,
wobei das eine oder die mehreren Rotationschutzformelemente (1e) durch den ersten Abschnitt (1b) mit vergrößertem Querschnitt der Hülse (1) bereitgestellt sind, die einen mindestens teilweise nicht kreisförmigen Querschnitt aufweisen, der dazu angepasst ist, mit einem mindestens teilweise komplementär geformten nicht kreisförmigen Querschnitt eines ersten Abschnitts mit vergrößertem Querschnitt (3b) der Durchgangsöffnung oder des Randausschnitts (3b) eines Siebmedienelements (3) zusammenzuwirken.

13. Siebausrüstung (5) zum Trennen von Feststoffen nach Größe, die Folgendes umfasst:
eine oder mehrere Anbaumuffen (4) zum Aufnehmen und Halten mindestens eines Siebmedienelements (3), das eine oder mehrere Durchgangsöffnungen oder Randausschnitte (3b) jeweils mit einem Abschnitt (3c) mit einem vergrößerten und einem verringerten Querschnitt (3d) aufweist, die an einer Verbindungsstelle dazwischen eine sich radial nach innen erstreckende Hülsenanschlagschulter (3e) definieren, wobei die Durchgangsöffnungen oder Randausschnitte (3b) mit den Anbaumuffen (4) ausgerichtet sind;
eine jeweilige Hülse (1), die aus einem Polymermaterial hergestellt ist, und eine sich axial erstreckende Durchgangsöffnung (1a) und einen ersten Abschnitt (1b) mit vergrößertem Querschnitt und einen zweiten Abschnitt (1c) mit verringertem Querschnitt umfasst, die an einer Verbindungsstelle dazwischen eine sich radial nach außen erstreckende Hülsenanschlagleiste (1d) definieren, wobei eine jeweilige Hülse (1) in einer jeweiligen der Durchgangsöffnungen oder Randausschnitte (3b) derart aufgenommen ist, dass eine Hülsenanschlagleiste (1d) davon auf der Hülsenanschlagschulter (3e) aufliegt, und derart, dass mindestens ein Teil des zweiten Abschnitts (1c) mit verringertem Querschnitt aus dem Siebmedienelement (3) hervorragt und in einer jeweiligen Anbaumuffe (4) aufgenommen ist;
einen jeweiligen Stift (2), der in die sich axial erstreckende Durchgangsöffnung (1a) der Hülse (1) derart eingesetzt ist, dass mindestens der zweite Abschnitt (1c) mit verringertem Querschnitt der Hülse (1) radial nach außen ausgedehnt und durch Presspassung an der jeweiligen Anbaumuffe (4) befestigt ist,
wobei der jeweilige Stift (2) weiter an seiner jeweiligen Hülse (1) durch Sicherungsmittel gesichert ist, die eine Drehung des jeweiligen Stifts (2) erfordern, und die eine oder die mehreren Durchgangsöffnungen oder Randausschnitte (3b) und die Hülse (1) ein oder mehrere komplementäre Rotationschutzformelemente (3a, 1e) umfassen, die dazu angepasst sind zusammenzuwirken, um zu verhindern, dass eine gegenseitige Drehung zwischen ihnen durch Drehung des Stifts (2) bewirkt wird, wobei das eine oder die mehreren Rotationschutzformelemente (1e) durch den ersten Abschnitt (1b) mit vergrößertem Querschnitt der Hülse (1) hindurch bereitgestellt werden, der einen mindestens teilweise nicht kreisförmigen Querschnitt aufweist, der dazu angepasst ist, mit einem mindestens teilweise komplementär geformten nicht kreisförmigem Querschnitt des Abschnitts (3a) mit vergrößertem Querschnitt der Durchgangsöffnung oder des Randausschnitts (3b) eines Siebmedienelements (3) zusammenzuwirken.

14. Siebausrüstung (5) zum Trennen von Feststoffen nach Größe, die mindestens ein Siebmedienelement (3) nach einem der Ansprüche 7 bis 10 und mindestens eine Kombination aus Hülse (1) und Stift (2) nach einem der Ansprüche 1 bis 6 umfasst.

## Revendications

1. Combinaison de manchon (1) et de tige (2) pour la fixation d'un ou plusieurs éléments de garniture (3) à une douille de fixation correspondante (4) d'un équipement de tamisage (5), ledit manchon (1) est en matériau polymère et comprend une ouverture traversante axiale (1a), une première partie de section transversale élargie (1b) et une seconde partie de section transversale réduite (1c) définissant un rebord d'arrêt de manchon s'étendant radialement vers l'extérieur (1d) au niveau d'une jonction entre celles-ci où au moins une partie de ladite seconde partie de section transversale réduite (1c) dudit manchon (1) peut être reçue dans une douille de fixation correspondante (4), et
dans laquelle ladite tige (2) est conçue pour être insérée dans ladite ouverture traversante axiale (1a) dudit manchon (1) et pivotée pour être fixée dans celui-ci, afin d'élargir au moins ladite seconde partie de section transversale réduite (1c) de celui-ci radialement vers l'extérieur, de sorte qu'elle se fixe par ajustement serré à celui-ci une fois reçue dans une dite douille de fixation correspondante (4) d'un dit équipement de tamisage (5), et ledit manchon (1) comprend en outre un ou plusieurs éléments de forme empêchant la rotation (1e) conçus pour interagir avec des éléments de forme empêchant la rotation complémentaires (3a) desdits un ou plusieurs éléments de garniture (3) afin d'empêcher toute rotation mutuelle induite par une dite rotation de ladite tige (2), dans lequel lesdits un ou plusieurs éléments de forme empêchant la rotation (1e) sont disposés à travers ladite première partie de section transversale élargie (1b) dudit manchon (1)
**caractérisée en ce que** les un ou plusieurs éléments de forme empêchant la rotation présentent une section transversale au moins partiellement non circulaire conçue pour coopérer avec une partie de section transversale élargie de section transversale non circulaire de forme au moins partiellement complémentaire (3a) d'une ouverture traversante ou d'une découpe de bord (3b) d'un dit élément de garniture (3).

2. Combinaison de manchon (1) et de tige (2) selon la revendication 1, dans laquelle au moins une partie de ladite seconde partie de section transversale réduite (1c) dudit manchon (1) comprend une ou plusieurs fentes axiales (1f), entre ladite ouverture traversante s'étendant axialement (1a) et une périphérie de celle-ci, lesdites une ou plusieurs fentes axiales (1f) étant conçues pour faciliter l'expansion radiale de ladite seconde partie de section transversale réduite (1c) dudit manchon (1) par ladite tige (2).

3. Combinaison de manchon (1) et de tige (2) selon l'une quelconque des revendications 1 ou 2, dans laquelle ladite tige (2) est filetée et conçue pour être tournée lors de l'insertion dans ladite ouverture traversante s'étendant axialement (1a) dudit manchon (1) de telle sorte qu'elle soit vissée dans ledit manchon (1) pour être fixée dans celui-ci.

4. Combinaison de manchon (1) et de tige (2) selon l'une quelconque des revendications 1 ou 2, dans laquelle ladite tige (2) comprend une première moitié (2a) d'une monture à baïonnette et ledit manchon (1) une seconde moitié (1g) d'une monture à baïonnette correspondante, et ladite tige (2) est conçue pour être tournée lors de l'insertion dans ladite ouverture traversante s'étendant axialement (1a) dudit manchon (1) pour être fixée dans celui-ci par interconnexion desdites moitiés de monture à baïonnette (2a, 1g) résultant d'une dite rotation.

5. Combinaison de manchon (1) et de tige (2) selon l'une quelconque des revendications 1 à 4, dans laquelle lesdits un ou plusieurs éléments de forme empêchant la rotation (1e) comprennent au moins un élément parmi des découpes s'étendant radialement dans ou des saillies à partir d'une surface d'au moins une de ladite première partie de section transversale élargie (1b) et de ladite seconde partie de section transversale réduite (1c).

6. Combinaison de manchon (1) et de tige (2) selon la revendication 5, dans laquelle ledit au moins un élément parmi des découpes ou des saillies depuis une surface d'au moins une de ladite première partie de section transversale élargie (1b) et de ladite seconde partie de section transversale réduite (1c) de ladite tige (1) comprend au moins un élément parmi : des découpes ou saillies en forme de secteur de cercle ; en forme de cannelure ; ou en forme de rainure, s'étendant radialement.

7. Élément de garniture (3) destiné à coopérer avec la combinaison manchon (1) et de tige (2) selon l'une quelconque des revendications 1 à 6, ledit élément de garniture (3) présentant une ou plusieurs ouvertures traversantes ou découpes de bord (3b), chacune présentant une section transversale élargie (3c) et réduite (3d), définissant un épaulement de butée de manchon (3e) s'étendant radialement vers l'intérieur au niveau d'une jonction entre celles-ci, lesdites une ou plusieurs ouvertures traversantes ou découpes de bord (3b) étant conçues pour recevoir un dit manchon (1) respectif de sorte qu'un dit rebord de butée de manchon (1d) repose sur ledit épaulement de butée de manchon (3e) et de sorte qu'au moins une partie d'une dite seconde partie de section réduite (1c) de celui-ci dépasse dudit élément de garniture (3) de sorte qu'elle puisse être reçue dans une douille de fixation correspondante (4) d'un équipement de tamisage (5),
**caractérisé en ce que**
ledit élément de garniture (3) comprend un ou plusieurs éléments de forme empêchant la rotation (3a) conçus pour interagir avec
des éléments de forme empêchant la rotation complémentaires (1e) d'un dit manchon (1) pour empêcher une rotation mutuelle entre eux induite par la rotation d'une dite tige (2) lors de l'insertion de celle-ci dans un dit manchon (1), dans lequel lesdits un ou plusieurs éléments de forme empêchant la rotation (1e) sont disposés à travers une première partie de section transversale élargie (1b) dudit manchon (1) présentant une section transversale au moins partiellement non circulaire conçue pour coopérer avec une partie de section transversale élargie de section transversale non circulaire de forme au moins partiellement complémentaire (3a) de l'ouverture traversante ou de la découpe de bord (3b) d'un dit élément de garniture (3).

8. Élément de garniture (3) selon la revendication 7, dans lequel lesdits un ou plusieurs éléments de forme empêchant la rotation (3a) comprennent au moins un élément parmi des découpes s'étendant radialement dans ou des saillies à partir d'au moins une surface de ladite partie de section transversale élargie (3c) et réduite (3d) d'une respective desdites une ou plusieurs ouvertures traversantes ou découpes de bord (3b).

9. Élément de garniture (3) selon la revendication 8, dans lequel ledit au moins élément parmi des découpes s'étendant radialement dans ou des saillies à partir d'au moins une surface de ladite partie de section transversale élargie (3c) et réduite (3d) d'une respective desdites une ou plusieurs ouvertures traversantes ou découpes de bord (3b) comprend au moins un élément parmi : des découpes ou saillies en forme de secteur de cercle ; en forme de cannelure ; ou en forme de rainure s'étendant radialement.

10. Élément de garniture (3) selon la revendication 7, dans lequel
lesdits un ou plusieurs éléments de forme empêchant la rotation (3a) sont disposés à travers ladite partie de section transversale élargie (3c) d'une dite ouverture traversante ou découpe de bord (3b) d'un dit élément de garniture (3) présentant au moins partiellement une section transversale non circulaire conçue pour coopérer avec une section transversale non circulaire de forme au moins partiellement complémentaire d'une dite première partie de section transversale élargie (1b) d'un dit manchon (1).

11. Agencement (1, 2, 3) de fixation d'un ou plusieurs éléments de garniture (3) à des douilles de fixation correspondantes (4) d'un équipement de tamisage (5), comprenant :
au moins un élément de garniture (3) présentant une ou plusieurs ouvertures traversantes ou découpes de bord (3b) chacune avec une partie de section transversale élargie (3c) et réduite (3d) définissant un épaulement d'arrêt de manchon s'étendant radialement vers l'intérieur (3e) au niveau d'une jonction entre celles-ci ;
au moins un manchon (1) en un matériau polymère et comprenant une ouverture traversante s'étendant axialement (1a) et une première partie de section transversale élargie (1b) et une seconde partie de section transversale réduite (1c) définissant un rebord d'arrêt de manchon s'étendant radialement vers l'extérieur (1d) au niveau d'une jonction entre celles-ci ;
au moins une tige (2) conçue pour être insérée dans ladite ouverture traversante s'étendant axialement (1a) dudit manchon (1) pour élargir au moins ladite seconde partie de section transversale réduite (1c) de celui-ci radialement vers l'extérieur ;
lesdites une ou plusieurs ouvertures traversantes ou découpes de bord (3b) dudit au moins un élément de garniture (3) étant conçues pour recevoir un dit manchon respectif (1) de telle sorte qu'un rebord d'arrêt de manchon (1d) de celui-ci repose sur ledit épaulement d'arrêt de manchon (3e) et de telle sorte qu'au moins une partie de ladite seconde partie de section transversale réduite (1c) de celui-ci dépasse dudit élément de garniture (3) de telle sorte qu'elle puisse être reçue dans une dite douille de fixation correspondante (4) d'un dit équipement de tamisage (5) de telle sorte qu'elle, lorsqu'elle est ainsi reçue, soit conçue pour être fixée par ajustement serré à celle-ci lors d'une dite expansion radiale vers l'extérieur provoquée par l'insertion d'une dite tige (2) ;
dans lequel chaque dite tige (2) est en outre conçue pour être tournée afin d'être fixée à un dit manchon (1) respectif lors de l'insertion de celle-ci dans une dite ouverture traversante (1a) s'étendant axialement, et lesdites ouvertures traversantes ou découpes de bord (3b) dudit au moins un élément de garniture (3) et ledit manchon (1) comprennent un ou plusieurs éléments de forme empêchant la rotation complémentaires (1e, 3a) conçus pour, lorsque ledit manchon (1) est reçu dans une dite ouverture traversante ou une dite découpe de bord (3b) dudit au moins un élément de garniture (3), interagir afin d'empêcher une rotation mutuelle entre eux induite par la rotation d'une dite tige (2) lors de l'insertion de celle-ci dans un manchon (1), dans lequel lesdits un ou plusieurs éléments de forme empêchant la rotation (1e) sont disposés à travers ladite première partie de section transversale élargie (1b) dudit manchon (1) présentant une section transversale au moins partiellement non circulaire conçue pour coopérer avec une partie de section transversale élargie de section transversale non circulaire de forme au moins partiellement complémentaire (3a) de l'ouverture traversante ou découpe de bord (3b) d'un élément de garniture (3).

12. Procédé de fixation d'un ou plusieurs éléments de garniture (3) à des douilles de fixation correspondantes (4) d'un équipement de tamisage (5), comprenant : le placement d'un élément de garniture (3), présentant des ouvertures traversantes ou des découpes de bord (3b) avec une partie de section transversale élargie (3c) et réduite (3d) définissant un épaulement d'arrêt de manchon s'étendant radialement vers l'intérieur (3e) au niveau d'une jonction entre celles-ci, sur un équipement de tamisage (5) et l'alignement desdites ouvertures traversantes ou découpes de bord (3b) avec des douilles de fixation (4) de celui-ci ;
l'insertion, dans lesdites ouvertures traversantes ou découpes de bord respectives (3b) desdits un ou plusieurs éléments de garniture (3), d'un manchon respectif (1) comprenant une ouverture traversante s'étendant axialement (1a) et une première partie de section transversale élargie (1b) et une seconde partie de section transversale réduite (1c) définissant un rebord d'arrêt de manchon s'étendant radialement vers l'extérieur (1d) au niveau d'une jonction entre celles-ci, de telle sorte que ledit rebord d'arrêt de manchon (1d) repose sur ledit épaulement d'arrêt de manchon (3e) et de telle sorte qu'au moins une partie de ladite seconde partie de section transversale réduite (1c) dépasse dudit au moins un élément de garniture (3) et soit reçue dans une dite douille de fixation alignée respective (4) ;
l'insertion d'une tige (2) dans l'ouverture traversante s'étendant axialement (1a) de chaque dit manchon (1) pour élargir radialement vers l'extérieur au moins ladite seconde partie de section réduite (1c) de celui-ci pour la fixer par ajustement serré à ladite douille de fixation (4), et la rotation de la tige (2) pour la fixer audit manchon (1), tout en empêchant la rotation mutuelle entre ledit manchon (1) et ledit élément de garniture (3) pendant ladite rotation au moyen d'éléments de garniture (3) et de manchons (1) présentant des éléments de forme empêchant la rotation de forme complémentaire (3a, 1e) au niveau desdites ouvertures traversantes ou desdites découpes de bord (3b) et au niveau desdits manchons (1),
dans lequel lesdits un ou plusieurs éléments de forme empêchant la rotation (1e) sont disposés à travers ladite première partie de section transversale élargie (1b) dudit manchon (1) présentant une section transversale au moins partiellement non circulaire conçue pour coopérer avec une partie de section transversale élargie de section transversale non circulaire de forme au moins partiellement complémentaire (3a) de l'ouverture traversante ou de la découpe de bord (3b) d'un dit élément de garniture (3).

13. Équipement de tamisage (5) pour séparer les matériaux solides selon leur taille comprenant :
une ou plusieurs douilles de fixation (4) pour recevoir et maintenir au moins un élément de garniture (3) présentant une ou plusieurs ouvertures traversantes ou découpes de bord (3b) chacune avec une partie de section transversale élargie (3c) et réduite (3d) définissant un épaulement d'arrêt de manchon s'étendant radialement vers l'intérieur (3e) au niveau d'une jonction entre celles-ci, lesdites ouvertures traversantes ou découpes de bord (3b) étant alignées avec lesdites douilles de fixation (4) ;
un manchon respectif (1) en un matériau polymère et comprenant une ouverture traversante s'étendant axialement (1a) et une première partie de section transversale élargie (1b) et une seconde partie de section transversale réduite (1c) définissant un rebord d'arrêt de manchon s'étendant radialement vers l'extérieur (1d) au niveau d'une jonction entre celles-ci, un dit manchon respectif (1) reçu dans une respective desdites ouvertures traversantes ou découpes de bord respectives (3b) de telle sorte qu'un dit rebord d'arrêt de manchon (1d) de celui-ci repose sur ledit épaulement d'arrêt de manchon (3e) et de telle sorte qu'au moins une partie de ladite seconde partie de section transversale réduite (1c) de celui-ci dépasse dudit élément de garniture (3) et soit reçue dans une dite douille de fixation respective (4) ;
une tige respective (2) insérée dans ladite ouverture traversante s'étendant axialement (1a) dudit manchon (1) de telle sorte qu'au moins ladite seconde partie de section transversale réduite (1c) dudit manchon (1) soit élargie radialement vers l'extérieur et fixée par ajustement serré à ladite douille de fixation respective (4),
dans lequel ladite tige respective (2) est en outre fixée à son manchon respectif (1) par des moyens de fixation nécessitant la rotation de ladite tige respective (2), et lesdites une ou plusieurs ouvertures traversantes ou découpes de bord (3b) et ledit manchon (1) comprennent un ou plusieurs éléments de forme empêchant la rotation complémentaires (3a, 1e) conçus pour interagir afin d'empêcher une rotation mutuelle entre eux induite par la rotation d'une dite tige (2), dans lequel lesdits un ou plusieurs éléments de forme empêchant la rotation (1e) sont disposés à travers ladite première partie de section transversale élargie (1b) dudit manchon (1) présentant une section transversale au moins partiellement non circulaire conçue pour coopérer avec une partie de section transversale élargie de section transversale non circulaire de forme au moins partiellement complémentaire (3a) de l'ouverture traversante ou de la découpe de bord (3b) d'un dit élément de garniture (3).

14. Équipement de tamisage (5) pour séparer des matériaux solides selon leur taille comprenant au moins un élément de garniture (3) selon l'une quelconque des revendications 7 à 10 et au moins une combinaison de manchon (1) et de tige (2) selon l'une quelconque des revendications 1 à 6.
